(19) Europäisches Patentamt
European Patent Office
Office européen des brevets

(11) **EP 3 340 567 B1**

(12) **EUROPEAN PATENT SPECIFICATION**

(45) Date of publication and mention
of the grant of the patent:
**29.07.2020  Bulletin 2020/31**

(51) Int Cl.:
***H04L 29/06*** [(2006.01)]

(21) Application number: **17208469.1**

(22) Date of filing: **19.12.2017**

(54) **MODEL FOR IDENTIFYING ATTACK PROPAGATION PATTERNS IN A MONITORED SENSOR-BASED SYSTEM**

MODELL ZUR IDENTIFIZIERUNG VON ANGRIFFSVERBREITUNGSMUSTERN IN EINEM ÜBERWACHTEN SENSORBASIERTEN SYSTEM

MODÈLE POUR IDENTIFIER DES SCHÉMAS DE PROPAGATION D'ATTAQUE DANS UN SYSTÈME À CAPTEURS SURVEILLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2016  IL 24968316**

(43) Date of publication of application:
**27.06.2018  Bulletin 2018/26**

(73) Proprietor: **Deutsche Telekom AG**
**53113 Bonn (DE)**

(72) Inventors:
• **SHAPIRA, Bracha**
 **IL-8472811 Beer Sheva (IL)**
• **BAR, Ariel**
 **IL-7740914 Ashdod (IL)**
• **MIMRAN, Dudu**
 **IL-6215505 Tel Aviv (IL)**
• **UNGER, Moshe**
 **IL-5228559 Ramat Gan (IL)**
• **ROKACH, Lior**
 **IL-8496500 Omer (IL)**
• **BRODT, Oleg**
 **IL-8471621 Beer Sheva (IL)**

(74) Representative: **Lampis, Marco et al**
**Dragotti & Associati Srl**
**Via Nino Bixio, 7**
**20129 Milano (IT)**

(56) References cited:
• **BAR ARIEL ET AL: "Identifying Attack Propagation Patterns in Honeypots Using Markov Chains Modeling and Complex Networks Analysis", 2016 IEEE INTERNATIONAL CONFERENCE ON SOFTWARE SCIENCE, TECHNOLOGY AND ENGINEERING (SWSTE), IEEE, 23 June 2016 (2016-06-23), pages 28-36, XP032927250, DOI: 10.1109/SWSTE.2016.13 [retrieved on 2016-07-18]**
• **BAR ARIEL ET AL: "Scalable attack propagation model and algorithms for honeypot systems", 2016 IEEE INTERNATIONAL CONFERENCE ON BIG DATA (BIG DATA), IEEE, 5 December 2016 (2016-12-05), pages 1130-1135, XP033056494, DOI: 10.1109/BIGDATA.2016.7840716 [retrieved on 2017-02-02]**
• **BEKERMAN DMITRI ET AL: "Unknown malware detection using network traffic classification", 2015 IEEE CONFERENCE ON COMMUNICATIONS AND NETWORK SECURITY (CNS), IEEE, 28 September 2015 (2015-09-28), pages 134-142, XP032825392, DOI: 10.1109/CNS.2015.7346821 [retrieved on 2015-12-03]**

## Description

### Field of the invention

The present invention relates to the field of malware attacks. More particularly, the present invention relates to a method for identifying propagation patterns of network attacks in systems including attack sensor, such as honeypots and network telescopes, and generating a model of such patterns.

### Background of the invention

Propagation patterns of network attacks represent the manner in which a malware (malicious software) spreads within a network. Modeling such patterns may shed light on different attack profiles and highlight interaction patterns between the deployed and monitored sensors within the system.

Bar Ariel et al., "Identifying Attack Propagation Patterns in Honeypots using Markov Chains modeling and complex networks analysis". 2016 IEEE International Conference on Software Science, Technology and Engineering (June 23, 2016) pp. 28-36 discloses a method for analyzing attack propagation patterns based on data collected from honeypots. Co-attacked regions on the honeypot framework are identified, and a ranking score for all monitored honeypots is assigned according to their contribution to the attack propagation. A determination is made whether contextual features have an effect on the attack propagation patterns.

Propagation pattern among two sensors is assumed to occur when a single attacker attacks or scans two sensors in a sequential order. Identification of propagation patterns between sensors in a monitored system can be advantageous for:

- predicting the next attacked sensor in an attack session;
- identifying groups of sensors that are being co-attacked;
- identifying new and evolving attack propagation patterns;
- identifying leading sensors that serve as 'enablers' for attack propagations within the monitored system;
- identifying groups of attackers that have similar attack profiles;
- assigning labels to these groups; and
- assigning an "attack diversity score" for each attacker.

It is therefore an object of the present invention to provide a method for generating a model of propagation patterns in a monitored system.

Other objects and advantages of the invention will become apparent as the description proceeds.

### Summary of the invention

The present invention is directed to a method for generating a model of propagation patterns in monitored sensor-based systems for identifying such propagation patterns, according to which one or more sensors are deployed within the sensor-based system, for providing data regarding access operations to the system. Metadata concerning monitored cyber-attacks is obtained, based on analysis of the data provided by the sensors, and portions of attacks from the metadata are contextually filtered, for reaching a desirable set of attacks for modeling. Then sessions and sequences of attacks, as well as a propagation graph, representing the propagation of attacks across the network, are created. The propagation graph is analyzed for identifying attacker behavior and a model of the analysis is then stored.

The graph may be the result of Markov Chains model training.

The propagation graph analysis may further comprise the detection of communities within the graph or calculation of the contribution of each monitored sensor to propagation.

In one aspect, attacker profiles may be generated from the detected communities and segment partition and then analyzed, for identifying attacker behavior.

The attacker profiles analysis may include at least one of the steps:

a. calculating an attacker rank score for each attacker; and
b. clustering attack profiles with similar behavior.

The attack profile clusters may be transformed into a supervised learning task, thereby producing labels for each attack profile cluster. The present invention is also directed to a system for generating a model of propagation patterns in monitored sensor-based systems for identifying such propagation patterns, which comprises:

a. one or more sensors deployed within the sensor-based system, for providing data regarding access operations to the system;
b. at least one processor adapted to:

b.1. obtain metadata concerning monitored cyber-attacks, based on analysis of the data provided by the sensors;
b.2. contextually filter portions of attacks from the metadata for reaching a desirable set of attacks for modeling;
b.3. create sessions and sequences of attacks;
b.4. create a propagation graph, representing the propagation of attacks across the network;
b.5. analyze the propagation graph for identifying attacker behavior; and

c. a memory for storing a model of the analysis.

**Brief description of the drawings**

Fig. 1 is a flowchart of the method generation according to an embodiment of the present invention;

Fig. 2 is an example of a graph representation of a network empirically achieved using the method of the present invention; and

Fig. 3 is a comparison between the propagation graph of attacks originating from China, and the propagation graph of attacks originating Russia, as were empirically achieved using the method of the present invention.

**Detailed description of the invention**

The present invention provides a framework for identifying propagation patterns of cyber-attacks in systems based on sensors, such as honeypots (a honeypot is a computer system that is set up to act as a decoy to lure cyberattackers, and to detect, deflect or study attempts to gain unauthorized access to information systems. Generally, it consists of a computer, applications, and data that simulate the behavior of a real system that appears to be part of a network but is actually isolated and closely monitored. All communications with a honeypot are considered hostile, as there's no reason for legitimate users to access a honeypot. Viewing and logging this activity can provide an insight into the level and types of threat a network infrastructure faces while distracting attackers away from assets of real value) and network telescopes (a network telescope is an Internet system that allows one to observe different large-scale events taking place on the Internet. The basic idea is to observe traffic targeting the dark (unused) address-space of the network. Since all traffic to these addresses is suspicious, one can gain information about possible network attacks, as well as other misconfigurations by observing it). Models are generated, representing various aspects of the attacks and the propagations.

Propagation pattern between two sensors is assumed to occur when a single attacker attacks or scans for vulnerabilities within the two sensors in a sequential order. The framework described herein identifies sequential patterns which determine that a single attacker attacked two specific sensors, e.g. sensor Y was immediately attacked after sensor X. These sequential attacks are henceforth referred to as "attack sessions".

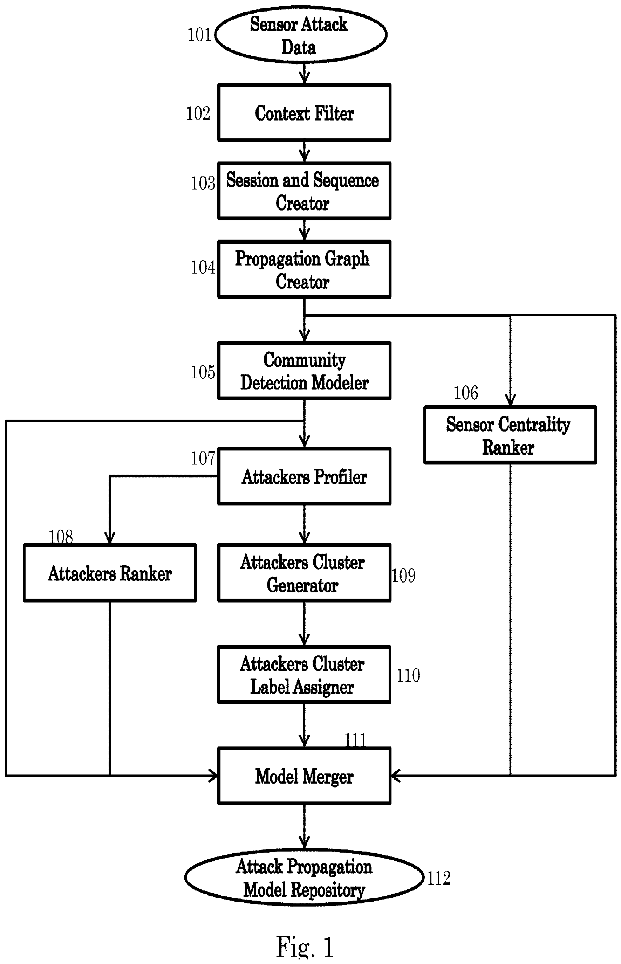

Fig. 1 illustrates a flowchart describing an embodiment of the network attacks' propagation pattern identification process, according to the present invention.

At the first step, 101, metadata concerning monitored cyber-attacks is obtained. A repository containing metadata about observed attacks can be used for this. Each recorded attack in the dataset describes an atomic attack on a monitored sensor e.g. a honeypot. The information about each attack must contain at least the following three attributes:

- Attacker ID - identifier of the attacker, e.g. the source IP address of the attacking machine;
- Attack Timestamp - the timestamp of the observed attack; and
- Attacked sensor ID - identifier of the attacked monitored resource/sensor, e.g. a honeypot ID or a subnet of network telescope.

Each attack may contain additional information describing different aspects of the attacks, for example the requested URL in web based attack, or the username/password which appear in dictionary attacks on an SSH server.

While the modeling process does not require the entire network traffic trace, the presented modeling process is applicable on data collected from "low", "medium" or "high" interaction sensor systems. In the next step, 102, a context filter is used to determine the desired contextual circumstances of the attacks during the modeling. Examples of contextual features may include:

- attack time - selecting attacks on specific date intervals, e.g. attacks between August 2015 and January 2016;

- attacked sensors - selecting only a subset of the monitored sensors;

- attacking machines - selecting a subset of the attacking machines according to their source IP addresses;

- attacking countries - selecting a subset of attacking countries;

- sensor type - selecting specific sensor types, e.g. modeling attacks only of Glastopf honeypots;

- protocols - selecting attacks on specific network protocols, e.g. TPC, UDP, SMB, MYSQL, HTTP, FTP etc.; or

- content keywords - filtering attacks according to key words which appear in the attack messages, e.g. attacks which contain key words such as "GET", "POST" or unique tokens.

The context filter is capable of combining multiple filters using "AND", "OR" and "NOT" logical operators.

In the next step, 103, attack sessions and sequences are created from the filtered attack metadata. An attack session is defined as all the atomic attack records from a single attacker in a certain time interval. For example, an attacker can be identified by the attacking source IP in a time interval of one hour. An attack sequence is a chronologically organized list of the atomic attacks in the session. If the attack sequence consists of a single sensor the sequence is discarded, since it does not contain propagation trend information.

The result of this step is a dataset of attack sequences. Each sequence describes the attack flow of a single attacker.

In the next step, 104, a propagation graph is created, representing the propagation of attacks across the network. The graph is a model that learns the probability distribution of the next attacked sensor in an attack sequence. Based on the sequences created in the previous step, the process of this step comprises training a Markov Chains model.

Markov Chains is a stochastic process that refers to sequences of random variables that change through over time. The assumption behind Markov Chains is that the probability distribution of the next state depends only on the current state and not on the sequence of events that preceded it. Markov Chains can thus be used to describe a system which follows a series of events, where what happens next depends only on the current state of the system.

Markov Chains are often modeled as a directed graph where the nodes represent the states and the edges are labeled with the probabilities of moving from one state in time $n$ to another state in time $n + 1$. A frequent assumption is that the Markov Chains are time-homogeneous, i.e., the probabilities on the graph are independent of $n$. Training a Markov Chain model requires estimating all transition probabilities from state $i$ to state $j$ (denoted as $P_{ij}$).

In the context of analyzing attack propagation, the modeling procedure takes the following assumptions:

- the sensors' IDs (denoted by $Sen_{id}$) are considered as states in the Markov Chains model, therefore the generated models are aimed at finding the probability $P_{ij}$ that an attacker will attack $Sen_j$ immediately after attacking $Sen_i$ within the current attack sequence; and

- estimating $P_{ij}$ is performed by calculating the ratio between the number of observed attack transition from $Sen_i$ to $Sen_j$, divided by the number of all observed transitions from $Sen_i$ to any other sensor.

The resulting Markov Chains model reveals information regarding the propagation trends within the sensors. It can be used to predict the next attacked sensor in a sequence of attacks. Moreover, the model can be utilized to detect abnormal attack sequences (sequences which do not follow the learned transition probabilities in the model).

In the next steps, 105-106, the Markov Chains graph representation of the network is analyzed for identifying propagation behaviors, and various features are extracted.

In step 105, based on the propagation graph, sensor segments, i.e. groups of sensors that are commonly attacked together, are discovered. To achieve this, a community detection algorithm is applied on the graphic representation of the Markov Chains model.

Formally: let the propagation graph $G = (V, E)$ be a weighted directed graph, where $V$ represents the set of all sensors in the monitored system and $E$ represents a set of directed edges between two nodes $(u, v)$, with $v \in V$; if the transition probability of the trained Markov Chains model ($P_{u,v}$) is non-zero. In addition, all edges in the graph are labeled with weights. The weights of edge $(u, v)$ is the transition probability ($P_{u,v}$) in the Markov Chains model.

With the above community representation, the process of community detection finds a partition of the graph into segments (communities) of internally crowded nodes, while nodes from different segments are sparsely connected.

In practice, the Louvain Modularity algorithm can be applied. This algorithm aims at maximizing the modularity measure. This measure relies on the ratio between the internal edges of the communities (links within the communities) and the external edges (links between communities). The Louvain Modularity algorithm has two phases that are repeated iteratively:

1. First, each node in the graph is assigned to its own community. Then, for each node i we consider how much gain (in terms of the modularity measure) we would achieve from removing it from its current community and merging it with an adjacent community. If the gain is positive, the algorithm will select the adjacent community that maximizes this value.

2. The second phase of the algorithm groups all the nodes in the same community, and builds a new graph, in which the nodes are the communities from the previous phase. The weights on the edges between the new nodes are given by the sum of the weights of the edges between nodes in the corresponding two communities. Edges between nodes of the same community are replaced with self-loops.

The algorithm repeats these two phases several times, until there is no modularity gain from changing the graph structure. The final result is a segmentation of the monitored sensors into groups that an attacker tends to attack together.

In the next step, 107, attacker profiles are generated. An attacker profile contains a set of binary indicators that state whether the given attacker followed a certain attack pattern. Attack patterns are defined as propagations within and between communities, i.e. given $C$ communities, we identify $C^2$ unique propagation patterns. For example, if the community modeler identified 2 distinct communities {C1, C2}, then there are 4 corresponding propagation patterns {C1>C1, C2>C2, C1>C2 and C2>C1}. The first two attack patterns are considered "within community" patterns as the propagation of the attack remains within the same community, while the last two are considered as "between communities" patterns since in these scenarios the attack propagation moved between communities.

In the next steps, 108 and 109, the attacker profiles are analyzed for identifying attacker behavior within the propagation process.

In step 108, an attacker rank score is calculated for each attacker based on the attacker's profile. The attacking rating scores measures the diversity level of the attacker with respect to the attack propagation patterns. The calculation of the rating score is presented in Eq. 1.

$$attack\_score = \#within\_score + 2 * \#between\_score$$

$$\text{Eq. 1}$$

#within_score is the number of "within community" non-zero indicators in the attacker's profile, while #between_score is the number of "between communities" non-zero indicators in the attacker's profile. The motivation behind the rating score is as follows:

- Attackers who only attack sensors from a single community should have a relative low diversity score, since propagation within a community is very common.
- Attackers who attack more communities should receive higher scores.
- Attackers who attack several sensors from different communities in a single session, i.e. attackers who transform between communities, should gain additional scores.

In step 109, attack profiles that share similar behavior are clustered. The clustering is performed on the attacker profiles which were created in step 107. In practice the k-means and EM-Clustering algorithms are applied to perform the clustering.

k-means follows a straightforward way to match a given data set through a certain number (k) of clusters, fixed in advance. The main idea is to define an initial set of k centroids randomly, one for each cluster. The next step is to take each point belonging to a given data set and associate it to the nearest centroid using a distance measure (e.g.: Euclidian distance). After assigning all the data points, k new centroids are recalculated, resulting from the new assignments of the previous step. We repeat these two steps (cluster assignment and centroid recalculation) until reaching a termination condition: either after a fixed number of iterations or when there is no change in the centroids' values.

EM algorithms are applied in order to find the maximum likelihood parameters of a statistical model. The EM iterations alternate between performing an expectation (E) step and maximization (M) step. The E step creates a function for the expectation of the log-likelihood of the variables, using the current estimated parameters. The M step computes parameters maximizing the expected log-likelihood found on the E step. In the context of clustering problem, the algorithm works as follows:

1. Given a dataset and a priory number of clusters (k), a k-Means clustering model is trained.
2. For each cluster and feature the estimated mean and variance are computed according to the instance memberships.
3. A series of Expectation - Maximization iterations is preformed:

   a. In the Expectation phase - for each instance in the dataset, find the "best matching" cluster according the distribution parameters of the current centroids (assuming a Gaussian distribution with the current observed mean and standard in each cluster). The best cluster is the one with maximum estimated probability that the current instance's features are taken from the current cluster's distribution parameters.
   b. In the Maximization phase - update the Gaussian distribution parameters (mean and standard deviation) for each cluster.

4. The algorithm stops after predefined number of iterations or after reaching a convergence condition where the difference in the log-likelihood between successive iterations is less than a certain threshold.

Once the k-centroids are identified, the final step is to assign each of observed attack profile to the cluster ID with the minimal Euclidian distance.

As the results of the clustering procedure of step 109 aren't very comprehensible, a label is assigned, in step 110, to each of the discovered clusters. To achieve this, the results of the unsupervised clustering procedure are transformed into a supervised learning task. The transformation is straightforward as the attack profile acts as the features, while the assigned cluster acts as the target class. Next a C4.5 decision tree is trained, in order to extract a compact set of rules that explains the clustering results.

In step 106 the propagation graph that was generated in step 104 is analyzed to calculate several centrality metrics which measure the contribution of each monitored sensor to the propagation process of attacks within the monitored system. Three centrality measures are calculated for each node in the propagation graph, i.e. for each monitored sensor:

1. Out-Degree Centrality - measures the out-degree (in terms of adjacent nodes) of the sensors on the prorogation graph $G$. High values of this metric suggest that attackers who attack this sensor, tend to spread out and continue to attack various other sensors. Therefore this centrality measure is treated as the "Spreading Potential" of the sensor. Similarly, a low out-degree indicates that attackers tend finish or abort their attack sequences with this sensor.
2. In- Degree Centrality - this is a symmetric centrality measure compared to the previous one. In this case the in-degree of each sensor in the prorogation graph $G$ is measured. This metric can be considered as the "Absorbing Potential" of the sensor. High values of this metric suggest that the origin of the attacks on this sensor (in an attack sequence) may result from multiple other sensors.
3. Betweenness Centrality - this measure counts the cases in which a node acts as a bridge, on the shortest path between two other nodes in the graph. Sensors with high degree of Betweenness centrality may act as mediators for attack propagation across the monitored system.

In step 111, all the sub-models that were generated in steps 104, 105, 106, 108 and 110 are merged into a unified model. Specifically, the final model contains a propagation graph (as result of step 104), the segmentation of the propagation graph to communities (as result of step 105), the centrality ranking scores for each monitored sensor (as result of step 106), the ranking score for each attacker (as result of step 108) and segmentation/clustering of attackers according to their attack profiles (as result of step 110).

Finally in step 112, the merged model is stored on a repository.

T-Pot Example:

In this section the applicability of the proposed method is demonstrated, by analyzing a massive dataset of attacks on the T-Pot Multi-Honeypot Platform. T-Pot contains multiple types of low and medium interaction honeypots, emulating various types of network services and protocols, including: HTTP, SSH, SMB, FTP, MSSQL and VOIP.

Overall, the analyzed dataset contained more than 167 million attacks on the T-Pot framework between July 2014 and August 2015. The attacks targeted 265 distinct honeypots deployed around the world. The attacks originated from 901,549 distinct IP addresses which spanned over 14,108 different internet service providers from 229 countries around the globe.

The transformation from atomic attack records into attack sessions, as performed in step 103 of Fig. 1, created 4,175,238 distinct attack sessions. 92.7% of the attack sessions where considered as "singleton" sessions, i.e. sessions which contain only one attacked honeypot. Since "singleton" sessions may not contribute to better understand attack propagations, they were filtered out for the remaining of the analysis. Overall, 305,134 observed attack sessions contained a propagation pattern within the honeypot system. The attack sessions which contained evidence regarding attack propagation trend, where furthered analyzed by the suggested framework.

Generating a propagation graph, as in step 104 of Fig. 1 produced a Markov Chains model with 229 states (honeypots/sensors), and 6,554 directed links between them. Each link was assigned with the matching propagation probability.

The Graph structure of the resulting Markov Chains model was furthered analyzed performing community detection and sensor centrality analysis (steps 105 and 106 of Fig. 1, respectively). Results indicate that the honeypots can be grouped into 5 solidly defined communities. Moreover, propagation within the communities themselves is much more common than propagation between communities. Additionally, it was observed that propagation between different communities tended to pass through honeypots with high Betweenness centrality value.

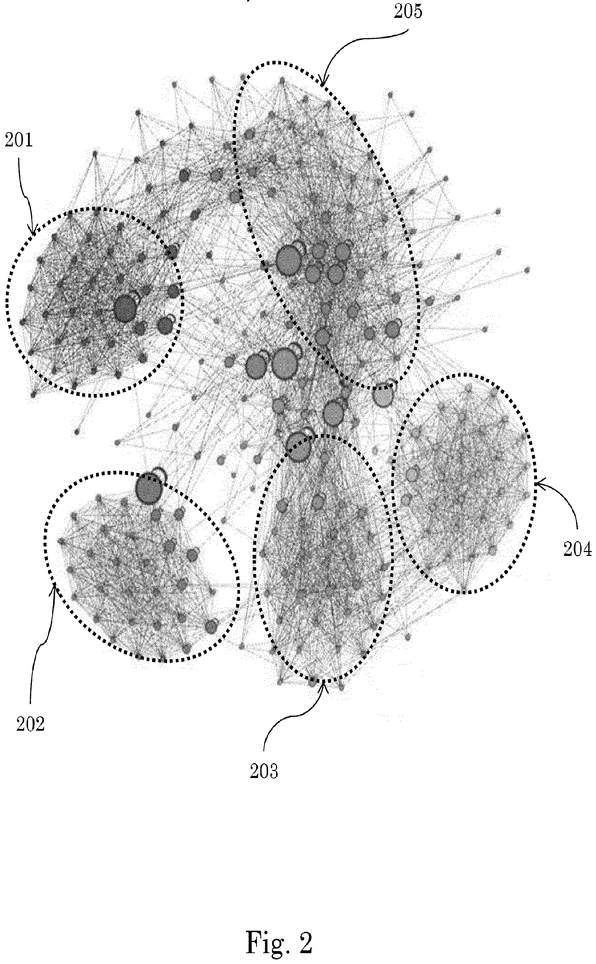

Fig. 2 summarizes the propagation analysis results described above. The figure illustrates the propagation graph structure. Each node represents a honeypot, while links between honeypots represent propagation between them. It may be observed that 5 different groups of nodes (201-205) represent five discovered communities. As observed, the communities form almost perfect cliques or heavily dense areas. The size of each node in the graph is proportional to the Betweenness centrality measure.

Attacker profiles were created, as in step 107 of Fig. 1, according to the 5 detected communities, capturing all possible 25 combinations of community propagations. The profiles were later used in order to calculate the attack variety score, as in step 108 of Fig. 1. The attack score distribution can be observed in Table 1.

Table 1

Overall, 83.4% of the attackers had an attack variety score of "1", meaning that each one of them had focused his/her attacks on a single honeypot community. Attackers with high variety scores are rarer, and can be furthered examined by security experts.

The attackers' profiles were also clustered using the procedure of step 109 of Fig. 1, using the EM-Clustering method. The clusters were furthered labeled using the C4.5 decision trees algorithm, as in step 110. Overall identified ten unique behavioral patterns were identified, that can be explained using fourteen decision tree rules as summarized in Table 2.

Table 2

| Cluster | Rules |
| --- | --- |
| $C_1$ | Attackers who attacked community 201 after attacking community 205. |
| $C_2$ | High variety attackers: |

(continued)

| Cluster | Rules |
|---|---|
| | • More than three "within community" attack types and more than three "between communities" attack types.<br>• (OR) "within community 204 " attacks + "within community 205 " attacks + additional "between communities" attack. |
| $C_3$ | Attackers who attacked community 203 after attacking community 205, with no other "between communities" attacks. |
| $C_4$ | Symmetric communities 203 / 204 attack types. |
| $C_5$ | Attackers on community 202. |
| $C_6$ | Attackers of communities 203 or 205, with no "between communities" attack. |
| $C_7$ | Attackers who attacked community 204, but not community 203. |
| $C_8$ | Symmetric communities 203 / 205 attack. |
| $C_9$ | Attackers on community 203 (with no other attack patterns). |
| $C_{10}$ | Attackers on community 205 (with no other attack patterns). |

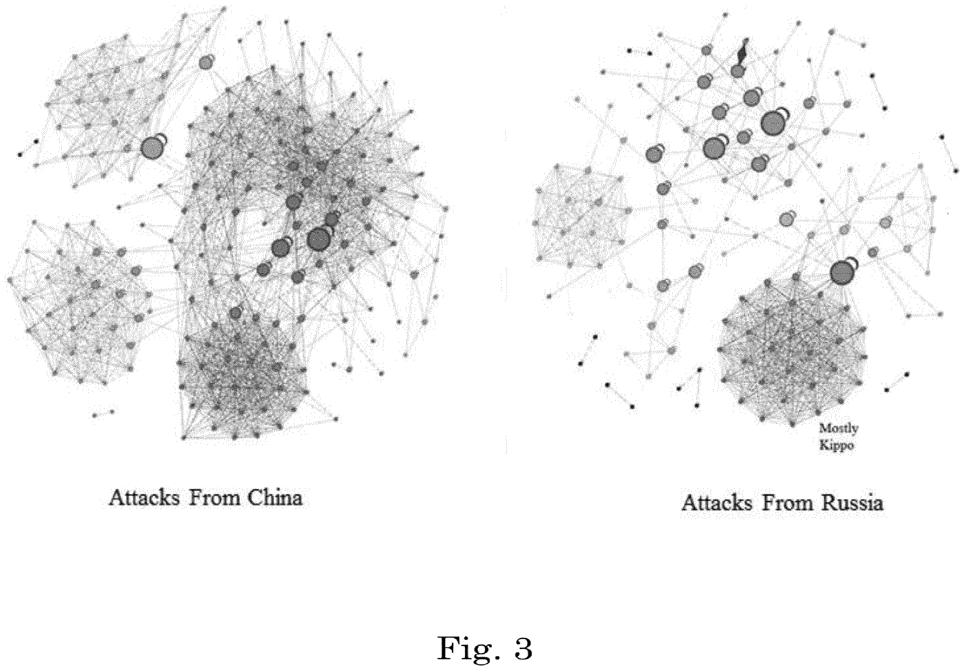

The final data analysis concerning the T-Pot platform was observing whether propagation trends vary between different attacking countries. For this analysis the modeling process was repeated using the contextual filter of step 102. Fig. 3 illustrates a comparison of the propagation graph of attacks that originating from China vs. attacks from Russia. Determining the origin of an attack was based on the source IP of the attackers, which was obtained by using a Geo-Location service. These two countries were selected since they were the two countries with the highest number of observed attacks on the honeypot system. As can be observed, the two propagation graphs are different from each other. The propagation graph of attacks originated from China has four well-defined communities. When the communities were examined more thoroughly, it was observed that they overlap four out of the five communities that where identified in the original analysis (all communities except the community 202 of Fig. 2. However, when examining the propagation graph of attacks originating from Russia, the similarity is less obvious. This analysis suggests that it is likely to expect different attack propagation patterns from different sources.

As various embodiments have been described and illustrated, it should be understood that variations will be apparent to one skilled in the art without departing from the principles herein. Accordingly, the invention is not to be limited to the specific embodiments described and illustrated in the drawings.

## Claims

1. A propagation analysis method regarding data traffic in a monitored sensor-based system for identifying propagation patterns, comprising the steps of:

    a. deploying two or more sensors within said sensor-based system, for providing data regarding access operations to said system; and
    b. by at least one processor:

        b.1 obtaining metadata concerning monitored cyber-attacks (101), based on analysis of the data provided by said sensors;
        b.2 contextually filtering portions of attacks from said metadata (102);
        b.3 creating sessions and sequences of attacks (103);
        b.4 creating a propagation graph (104), representing propagation of attacks across a network;
        b.5 analyzing said propagation graph for identifying attacker behavior by:

            i. detecting communities (201-205) within the graph (105);
            ii. generating attacker profiles (107), wherein each of the attacker profiles is indicative of whether a given attacker followed a certain attack pattern being defined as propagation within or between said detected communities;
            iii. analyzing said attacker profiles for identifying attacker behavior; and

iv. calculating an attack propagation pattern related score (108),

**characterized in that** said at least one processor calculates the attack propagation pattern related score by calculating an attacker score for the given attacker based on a diversity level with respect to attack propagation patterns,
wherein the attacker score is equal to, for the given attacker and in
a single session, a sum of 1) a number of non-zero attack indicators
of attack propagation pattern within a given community that has been detected in the graph, and 2) a product of a constant factor
and a number of non-zero attack indicators of attack propagation pattern between the given community and another community that has been detected in the graph,
wherein a single session is defined by all atomic attack records for the given attacker during a predetermined time interval.

2. The method of claim 1, wherein the graph is the result of Markov Chains model training.

3. The method of claim 1, wherein the propagation graph analysis further comprises calculating the contribution of each monitored sensor to propagation.

4. The method of claim 1, wherein communities (201-205) are detected within the graph by finding a partition that segments the graph into communities of internally crowded and connected nodes, while other nodes external to one of the segmented communities are sparsely connected.

5. The method of claim 1, wherein said attacker profile analysis includes clustering attack profiles with similar behavior (109).

6. The method of claim 5, wherein said attack profile clusters are transformed into a supervised learning task, thereby producing labels for each attack profile cluster (110).

7. The method of claim 1, wherein the at least one processor also stores a model of the analysis in a memory (112).

8. The method of claim 7, wherein the at least one processor generates the model (111) based on the calculated attacker score.

9. A propagation analysis system regarding data traffic in a monitored sensor-based system for identifying propagation patterns, comprising:

    a. two or more sensors deployed within said sensor-based system, for providing data regarding access operations to said system;
    b. at least one processor adapted to:

        b.1. obtain metadata concerning monitored cyber-attacks, based on analysis of the data provided by said sensors;
        b.2. contextually filter portions of attacks from said metadata for reaching a desirable set of attacks for modeling;
        b.3. create sessions and sequences of attacks;
        b.4. create a propagation graph, representing the propagation of attacks across the network;
        b.5. analyze said propagation graph for identifying attacker behavior by:

            i. detecting communities (201-205) within the graph (105);
            ii. generating attacker profiles (107), wherein each of the attacker profiles is indicative of whether a given attacker followed a certain attack pattern being defined as propagation within or between said detected communities;
            iii. analyzing said attacker profiles for identifying attacker behavior; and
            iv. calculating an attack propagation pattern related score (108),

        **characterized in that** said at least one processor calculates the attack propagation pattern related score by calculating an attacker score for the given attacker based on a diversity level with respect to attack propagation patterns,

wherein the attacker score is equal to, for the given attacker and in a single session, a sum of 1) a number of non-zero attack indicators of attack propagation pattern within a given community that has been detected in the graph and 2) a product of a constant factor and a number of non-zero attack indicators of attack propagation pattern between the given community and another community that has been detected in the graph,

wherein a single session is defined by all atomic attack records for the given attacker during a predetermined time interval.

**10.** The system of claim 9, in which the graph is the result of Markov Chains model training.

**11.** The system of claim 9, in which the propagation graph analysis further comprises calculating the contribution of each monitored sensor to propagation.

**12.** The system of claim 9, wherein the at least one processor is adapted to detect communities (201-205) within the graph by finding a partition that segments the graph into communities of internally crowded and connected nodes, while other nodes external to one of the segmented communities are sparsely connected.

**13.** The system of claim 9, wherein each of the one or more sensors is selected from the group of Glastopf honeypots, low interaction honeypots, medium interaction honeypots, and network telescopes.

**14.** The system of claim 9, further comprising a memory (112) within which a model of the analysis is storable, wherein the at least one processor is adapted to generate (111) the model based on the calculated attacker score.

## Patentansprüche

**1.** Datenverkehr-Ausbreitungs-Analyseverfahren in einem überwachten Sensor-basierten System zum Identifizieren eines Ausbreitungsmusters, welches die Schritte umfasst:

a. Einsetzen von zwei oder mehreren Sensoren in dem Sensor-basierten System, zur Bereitstellung von Daten bezüglich Zugriffsoperationen auf das System; und
b. mittels mindestens einem Prozessor:

b.1 Erhalten von Metadaten bezüglich verzeichneter Cyberattacken (101), basierend auf einer Analysis der von den Sensoren bereitgestellten Daten;
b.2 Kontext-abhängiges Filtern von Bereichen der Angriffe aus den Metadaten (102);
b.3 Erzeugen von Sitzungen und Sequenzen der Angriffe (103);
b.4 Erzeugen eines Ausbreitungsgraphen (104), der die Ausbreitung der Attacken über ein Netzwerk darstellt;
b.5 Analysieren des Ausbreitungsgraphen zum Identifizieren des Verhaltens des Angreifers mittels:

i. Erfassen von Gemeinsamkeiten (201-205) in dem Graphen (105);
ii. Erzeugen von Profilen des Angreifers (107), wobei jedes der Angreiferprofile anzeigt, ob ein bestimmter Angreifer einem bestimmten Angriffsmuster folgt, das als Ausbreitung in oder zwischen den erfassten Gemeinsamkeiten definiert wird;
iii. Analysieren der Angreiferprofile zum Identifizieren des Verhaltens des Angreifers; und
iv. Berechnen eines mit dem Angriffs-Ausbreitungsmuster assoziierten Scores (108),

**dadurch gekennzeichnet, dass** der mindestens eine Prozessor den mit dem Angriffs-Ausbreitungsmuster assoziierten Score durch Berechnen eines Angreifer-Scores für den bestimmten Angreifer basierend auf einem Diversitäts-Niveau bezüglich des Angriffs-Ausbreitungsmusters berechnet, wobei der Angreifer-Score für den bestimmten Angreifer und in einer Einzelsitzung gleich ist einer Summe von 1) einer Anzahl ungleich Null von Angriffs-Indikatoren des Angriffs-Ausbreitungsmusters in einer bestimmten Gemeinsamkeit, die in dem Graphen erfasst wurde, und 2) einem Produkt eines konstanten Faktors und einer Anzahl von Angriffs-Indikatoren ungleich Null des Angriffs-Ausbreitungsmusters zwischen der bestimmten Gemeinsamkeit und einer anderen Gemeinsamkeit, die in dem Graphen erfasst wurde, worin eine Einzelsitzung durch alle atomischen Angriffsaufzeichnungen für den bestimmten Angreifer während eines bestimmten Zeitintervalls definiert wird.

2. Verfahren nach Anspruch 1, wobei der Graph das Ergebnis eines Markov-Ketten Modell-Trainings ist.

3. Verfahren nach Anspruch 1, wobei die Analyse des Ausbreitungsgraphen weiter umfasst, Berechnen des Beitrags eines jeden überwachten Sensors zu der Ausbreitung.

4. Verfahren nach Anspruch 1, wobei die Gemeinsamkeiten (201-205) in dem Graphen durch Auffinden einer Partition erfasst wird, die den Graph in Gemeinsamkeiten intern überfüllter und verbundener Knoten segmentiert, während andere Knoten extern zu einem der segmentierten Gemeinsamkeiten wenig verbunden sind.

5. Verfahren nach Anspruch 1, wobei die Analyse des Angreiferprofils umfasst, Clustern von Angriffsprofilen mit gleichem Verhalten (109).

6. Verfahren nach Anspruch 5, wobei die Angriffsprofil-Cluster in eine überwachte Lernaufgabe transformiert werden, wodurch für jedes Angriffsprofil-Cluster (110) Marker erzeugt werden.

7. Verfahren nach Anspruch 1, wobei der mindestens eine Prozessor weiter ein Modell der Analyse in einem Speicher (112) abspeichert.

8. Verfahren nach Anspruch 7, wobei der mindestens eine Prozessor das Modell (111) basierend auf dem berechneten Angreifer-Score erzeugt.

9. Datenverkehr-Ausbreitungsanalyse-System in einem überwachten Sensor-basierten System zum Identifizieren des Ausbreitungsmusters, welches umfasst:

    a. zwei oder mehrere in dem Sensor-basierten System eingesetzte Sensoren, zur Bereitstellung von Daten bezüglich der Zugriffsoperationen auf das System;
    b. mindestens ein Prozessor, der angepasst ist zum:

        b.1. Erhalten von Metadaten bezüglich verzeichneter Cyberattacken basierend auf Analysen der von den Sensoren bereitgestellten Daten;
        b.2. Kontext-abhängiges Filtern von Bereichen der Angriffe aus den Metadaten zum Erreichen einer wünschenswerten Modellierung;
        b.3. Erzeugen von Sitzungen und Sequenzen der Angriffe;
        b.4. Erzeugen eines Ausbreitungsgraphen, der die Ausbreitung der Angriffe über das Netzwerk anzeigt;
        b.5. Analysieren des Ausbreitungsgraphen zum Identifizieren des Verhaltens des Angreifers mittels:

            i. Erfassen von Gemeinsamkeiten (201-205) in dem Graphen (105);
            ii. Erzeugen von Angreiferprofilen (107), wobei jedes der Angreiferprofile anzeigt, ob ein bestimmter Angreifer einem bestimmten Angriffs-Muster folgt, das als Ausbreitung in oder zwischen den erfassten Gemeinsamkeiten definiert wird;
            iii. Analysieren der Angreiferprofile zum Identifizieren des Verhaltens des Angreifers; und
            iv. Berechnen eines mit dem Angriffs-Ausbreitungsmuster assoziierten Scores (108),

    dadurch gekennzeichnet, dass der mindestens eine Prozessor den mit dem Angriffs-Ausbreitungsmuster assoziierten Score mittels Berechnen eines Angreifer-Score für den bestimmten Angreifer basierend auf einem Diversitäts-Niveau bezüglich des Angriffs-Ausbreitungsmusters berechnet, worin der Angreifer-Score für den bestimmten Angreifer und in einer Einzelsitzung gleich ist einer Summe von 1) einer Zahl ungleich Null von Angriffs-Indikatoren des Angriffs-Ausbreitungsmusters in einer bestimmten Gemeinschaftkeit, die in dem Graphen erfasst wurde und 2) einem Produkt eines konstanten Faktors und einer Anzahl ungleich Null von Angriffs-Indikatoren des Angriffs-Ausbreitungsmusters zwischen der bestimmten Gemeinschaftkeit und einer anderen Gemeinschaftkeit, die in dem Graphen erfasst wird, worin eine Einzelsitzung durch alle atomischen Angriffsaufzeichnungen für den bestimmten Angreifer während eines bestimmten Zeitintervalls definiert wird.

10. System nach Anspruch 9, in dem der Graph das Ergebnis eines Markov-Ketten-Modell-Trainings ist.

**11.** System nach Anspruch 9, in dem die Analyse des Ausbreitungsgraphen weiter umfasst, Berechnen des Beitrags eines jeden überwachten Sensors für die Ausbreitung.

**12.** System nach Anspruch 9, worin der mindestens eine Prozessor angepasst ist, Gemeinsamkeiten (201-205) in dem Graphen durch Auffinden einer Partition zu erfassen, die den Graphen in Gemeinsamkeiten intern überfüllter und verbundener Knoten segmentiert, während andere Knoten extern zu den segmentierten Gemeinsamkeiten wenig verbunden sind.

**13.** System nach Anspruch 9, worin jeder der ein oder mehreren Sensoren ausgewählt ist aus der Gruppe aus Glastopf-Honeypots, Honeypots mit geringen Wechselwirkungen, Honeypots mit mittleren Wechselwirkungen und Network Telescopes.

**14.** System nach Anspruch 9, welches weiter einen Speicher (112) umfasst, in dem ein Analyse-Modell gespeichert werden kann, worin der mindestens eine Prozessor angepasst ist, (111) das Modell basierend auf dem berechneten Angreifer-Score zu berechnen.


**Revendications**

**1.** Procédé d'analyse de propagation concernant un trafic de données dans un système à base de capteurs surveillés pour identifier des motifs de propagation, comprenant les étapes :

    a. de déploiement de deux capteurs ou plus dans ledit système à base de capteurs, pour fournir des données concernant des opérations d'accès audit système ; et
    b. par au moins un processeur :

        b1. d'obtention de métadonnées concernant des cyber-attaques surveillées (101), sur la base de l'analyse des données fournies par lesdits capteurs ;
        b2. de filtrage de manière contextuelle des parties d'attaques desdites métadonnées (102) ;
        b3. de création de sessions et de séquences d'attaques (103) ;
        b4. de création d'un graphe de propagation (104), représentant la propagation des attaques à travers un réseau ;
        b5. d'analyse dudit graphe de propagation pour identifier un comportement d'attaquant en :

            i. détectant des communautés (201 à 205) dans le graphe (105) ;
            ii. générant des profils d'attaquant (107), dans lequel chacun des profils d'attaquant indique si un attaquant donné a suivi un certain modèle d'attaque défini en tant que propagation dans ou entre lesdites communautés détectées ;
            iii. analysant lesdits profils d'attaquant pour identifier un comportement d'attaquant ; et
            iv. calculant un score associé au motif de propagation d'attaque (108),

        **caractérisé en ce que** ledit au moins un processeur calcule le score associé au motif de propagation d'attaque en calculant un score d'attaquant pour l'attaquant donné sur la base d'un niveau de diversité par rapport à des motifs de propagation d'attaque,
        dans lequel le score d'attaquant est égal, pour l'attaquant donné et dans une session unique, à une somme (1) d'un nombre d'indicateurs d'attaque non nuls de motif de propagation d'attaque dans une communauté donnée qui a été détectée dans le graphe, et (2) d'un produit d'un facteur constant et d'un nombre d'indicateurs d'attaque non nuls de motif de propagation d'attaque entre la communauté donnée et une autre communauté qui a été détectée dans le graphe,
        dans lequel une session unique est définie par tous les enregistrements d'attaques atomiques pour l'attaquant donné pendant un intervalle de temps prédéterminé.

**2.** Procédé selon la revendication 1, dans lequel le graphe est le résultat d'un apprentissage de modèle de chaines de Markov.

**3.** Procédé selon la revendication 1, dans lequel l'analyse de graphe de propagation comprend en outre le calcul de la contribution de chaque capteur surveillé à la propagation.

**4.** Procédé selon la revendication 1, dans lequel les communautés (201 à 205) sont détectées dans le graphe en trouvant une partition qui segmente le graphe en communautés de nœuds intérieurement peuplés et connectés, alors que les autres nœuds à l'extérieur de l'une des communautés segmentées sont faiblement connectés.

**5.** Procédé selon la revendication 1, dans lequel ladite analyse de profil d'attaquant comprend le groupement des profils d'attaque ayant un comportement similaire (109).

**6.** Procédé selon la revendication 5, dans lequel lesdits groupes de profils d'attaque sont transformés en une tâche d'apprentissage supervisée, produisant de ce fait des étiquettes pour chaque groupe de profils d'attaque (110).

**7.** Procédé selon la revendication 1, dans lequel ledit au moins un processeur mémorise également un modèle de l'analyse dans une mémoire (112).

**8.** Procédé selon la revendication 7, dans lequel ledit au moins un processeur génère le modèle (111) sur la base du score d'attaquant calculé.

**9.** Système d'analyse de propagation concernant un trafic de données dans un système à base de capteurs surveillés pour identifier des motifs de propagation, comprenant :

    a. deux capteurs ou plus déployés dans ledit système à base de capteurs, pour fournir des données concernant des opérations d'accès audit système ;
    b. au moins un processeur conçu pour :

        b1. obtenir des métadonnées concernant des cyber-attaques surveillées, sur la base de l'analyse des données fournies par lesdits capteurs ;
        b2. filtrer de manière contextuelle les parties d'attaques desdites métadonnées pour atteindre un ensemble souhaitable d'attaques pour une modélisation ;
        b3. créer des sessions et des séquences d'attaques ;
        b4. créer un graphe de propagation, représentant la propagation des attaques à travers le réseau ;
        b5. analyser ledit graphe de propagation pour identifier un comportement d'attaquant en :

            i. détectant des communautés (201 à 205) dans le graphe (105) ;
            ii. générant des profils d'attaquant (107), dans lequel chacun des profils d'attaquant indique si un attaquant donné a suivi un certain modèle d'attaque défini en tant que propagation dans ou entre lesdites communautés détectées ;
            iii. analysant lesdits profils d'attaquant pour identifier un comportement d'attaquant ; et
            iv. calculant un score associé au motif de propagation d'attaque (108),

        **caractérisé en ce que** ledit au moins un processeur calcule le score associé au motif de propagation d'attaque en calculant un score d'attaquant pour l'attaquant donné sur la base d'un niveau de diversité par rapport à des motifs de propagation d'attaque,
        dans lequel le score d'attaquant est égal, pour l'attaquant donné et dans une session unique, à une somme (1) d'un nombre d'indicateurs d'attaque non nuls de motif de propagation d'attaque dans une communauté donnée qui a été détectée dans le graphe et (2) d'un produit d'un facteur constant et d'un nombre d'indicateurs d'attaque non nuls de motif de propagation d'attaque entre la communauté donnée et une autre communauté qui a été détectée dans le graphe,
        dans lequel une session unique est définie par tous les enregistrements d'attaques atomiques pour l'attaquant donné pendant un intervalle de temps prédéterminé.

**10.** Système selon la revendication 9, dans lequel le graphe est le résultat d'un apprentissage de modèle de chaines de Markov.

**11.** Système selon la revendication 9, dans lequel l'analyse de graphe de propagation comprend en outre le calcul de la contribution de chaque capteur surveillé à la propagation.

**12.** Système selon la revendication 9, dans lequel ledit au moins un processeur est conçu pour détecter des communautés (201 à 205) dans le graphe en trouvant une partition qui segmente le graphe en communautés de nœuds intérieurement peuplés et connectés, alors que les autres nœuds à l'extérieur de l'une des communautés segmentées sont faiblement connectés.

13. Système selon la revendication 9, dans lequel chacun desdits un ou plusieurs capteurs est sélectionné dans le groupe de leurres Glastopf, de leurres à faible interaction, de leurres à interaction moyenne, et de télescopes de réseau.

14. Système selon la revendication 9, comprenant en outre une mémoire (112) dans laquelle un modèle de l'analyse peut être mémorisé, dans lequel ledit au moins un processeur est conçu pour générer (111) le modèle sur la base du score d'attaquant calculé.

Fig. 1

Fig. 2

Attacks From China

Attacks From Russia

Mostly Kippo

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BAR ARIEL et al.** Identifying Attack Propagation Patterns in Honeypots using Markov Chains modeling and complex networks analysis. *2016 IEEE International Conference on Software Science, Technology and Engineering,* 23 June 2016, 28-36